# EUROPEAN PATENT SPECIFICATION

(11) **EP 1 783 040 B1**
(45) Date of publication and mention of the grant of the patent: **30.05.2012**
(21) Application number: 06023267.5
(22) Date of filing: 08.11.2006
(51) Int. Cl.: B62J 35/00, F02M 37/10, B62K 11/04

(54) **Straddle-type vehicle**
Im Grätschsitz zu benutzendes Fahrzeug
Véhicule du type monté à califourchon

(30) Priority: 08.11.2005 JP 2005323447
(43) Date of publication of application: 09.05.2007
(73) Proprietor: Yamaha Hatsudoki Kabushiki Kaisha, Shizuoka-ken 438-8501 (JP)
(72) Inventor: Satake, Hidenori c/oYamaha Hatsudoki Kabushiki Kaisha, Iwata-shi, Shizuoka-ken 438-8501 (JP); Suzuki, Satoshi c/oYamaha Hatsudoki Kabushiki Kaisha, Iwata-shi, Shizuoka-ken 438-8501 (JP)
(74) Representative: Grünecker, Kinkeldey, Stockmair & Schwanhäusser

(56) References cited:
- EP-A- 1 602 569
- DE-A1- 19 938 273
- FR-A1- 2 603 004
- JP-A- 2000 282 993

## Description

The present invention relates to a straddle-type vehicle according to the preamble of independent claim 1. Such a straddle-type vehicle can be taken from the prior art document DE 199 38 273 A1. Said document illustrates a motorcycle having a fuel tank arranged above a pair of frame members. At the rear of the fuel tank a fuel pump is arranged, wherein an air cleaner is arranged below a front part of the fuel tank and forwardly of said fuel pump.

A further prior art document FR 2 603 004 teaches a motorcycle having a fuel tank arranged on a frame, wherein an air cleaner is arranged below a rear part of said fuel tank. In front of the air cleaner and between the engine and said air cleaner a carburetor is placed.

Conventionally, there is known a straddle-type vehicle, in which a seat is arranged rearwardly of a fuel tank and an air cleaner is mounted below a rear portion of the fuel tank, like so-called motorcycle type motorcycles, etc. With a straddle-type vehicle of this kind, however, in association with an arrangement of an air cleaner below a rear portion of a fuel tank, there is a large restriction on a position, in which a fuel tank is mounted in the fuel tank, in order to avoid interference of a fuel pipe, which extends downward from the fuel tank, etc. with the air cleaner.

On the other hand, a fuel (referred below to as ineffective residue), which cannot be drawn by a fuel pump, out of a fuel in the fuel tank is generated according to a shape of the fuel tank and a position of the fuel pump. Therefore, in order to reduce an ineffective residue of a fuel, the fuel pump must be disposed in a position, in which a major part of a fuel in the fuel tank can be drawn. Accordingly, from the viewpoint of restricting an ineffective residue, there are certain restrictions on a shape of the fuel tank and layout of the fuel pump.

Hereupon, in order to heighten freedom in a mount position of a fuel pump and to achieve reduction in ineffective residue of a fuel, it is proposed in the following Patent Document 1 to provide an external pipe line composed of a rubber hose, through which a fuel is supplied to a fuel pump from a low location in a fuel tank, so as to enable drawing a major part of a fuel even when the fuel pump is not provided in a lower location in the fuel tank.
Patent Document 1: JP-A-2002-293281

However, a motorcycle disclosed in Patent Document 1 is complicated in construction since there is a need for an external pipe line below a fuel tank. Also, since the external pipe line is present below the fuel tank, a space, in which an air cleaner is mounted, is decreased correspondingly and so it is difficult to enlarge a volume of the air cleaner.

The invention has been thought of in view of such point and has its object to provide a straddle-type vehicle as Indicted above which can reduce an ineffective residue of a fuel, simplify a construction of a fuel supply system and achieve an increase in volume of an air cleaner in a straddle-type vehicle, in which a seat is arranged rearwardly of a fuel tank.

This objective is solved in an inventive manner by a straddle-type vehicle having the features of independent claim 1.

Preferably, the fuel pump is positioned substantially centrally of the fuel tank in a longitudinal direction.

Further, preferably the mount seat of the fuel tank is provided on the central bottom surface of the bottom plate of the fuel tank, which is lower than the rear bottom surface positioned above the air cleaner.

According to another preferred embodiment, the straddle-type vehicle further comprises a pair of left and right frame members, respectively, of which a thickness in a vertical direction is larger than that in a left and right direction.

According to a further preferred embodiment, the straddle-type vehicle further comprises a fuel supply passage, through which a fuel discharged from the fuel pump is led, wherein a connection is formed on a lower portion of the fuel pump to be connected to the fuel supply passage.

Preferably, the connection is arranged in a higher position than the frame members as viewed in side view.

According to another preferred embodiment, the straddle-type vehicle further comprises a side cover, which covers at least a part of a side of the connection.

According to a further preferred embodiment, the straddle-type vehicle further comprises an engine arranged forwardly of the air cleaner and having a cylinder extending upward or obliquely upward, and an intake passage connected to the cylinder and the air cleaner and arranged in a lower position than an upper end of the cylinder and an upper end of the air cleaner, wherein the fuel pump is positioned between the cylinder and the air cleaner with respect to a longitudinal position.

Preferably, the engine is a single cylinder engine.

Further, preferably the fuel tank comprises a top positioned in an uppermost side, and a top of the fuel tank and a top of the fuel pump overlap each other as viewed in plan view.

Yet further, preferably the fuel tank is formed with an oil filler hole. Therein, the oil filler hole may be positioned forwardly of the fuel pump.

Preferably, the fuel tank comprises a stopper, which inhibits insertion of a fuel oil gun over a predetermined extend into the oil filler hole.

Further, preferably a recess dented upward is formed on the bottom plate of the fuel tank to be outside the mount seat in a left and right direction.

In the following, the present invention is explained in greater detail with respect to several embodiments thereof in conjunction with the accompanying drawings, wherein:
- Fig. 1: is a side view showing a motorcycle,
- Fig. 2: is a side view showing a vehicle body frame,
- Fig. 3: is a plan view showing the vehicle body frame,
- Fig. 4: is a back view showing the vehicle body frame,
- Fig. 5: is a left side view showing a fuel tank,
- Fig. 6: is a bottom view showing the fuel tank,
- Fig. 7: is a view showing the fuel tank and an air cleaner as viewed from the rear,
- Fig. 8: is a perspective view showing the fuel tank and the air cleaner as viewed from rearward and leftwardly upward,
- Fig. 9: is a plan view showing the fuel tank,
- Fig. 10: is a cross sectional view conceptually showing an irregular shape of a bottom surface of the fuel tank,
- Fig. 11: is a right side view showing a rear arm bracket, and
- Fig. 12: is a perspective view showing a root side portion of a main stand as viewed from forward and leftwardly downward.

Description of Reference Numerals and Signs:
10: motorcycle (straddle-type vehicle)
11: vehicle body frame
12: engine
13: fuel tank
14: seat
16L, 16R: main frame (frame member)
26: oil filler hole
28: stopper
30: fuel pump
30a: connection
31: mount seat
36: bead
40: intake pipe (intake passage)
41: air cleaner
61: fuel supply pipe (fuel supply passage)
62: side cover
65: cylinder

An embodiment will be described below in detail with reference to the drawings.

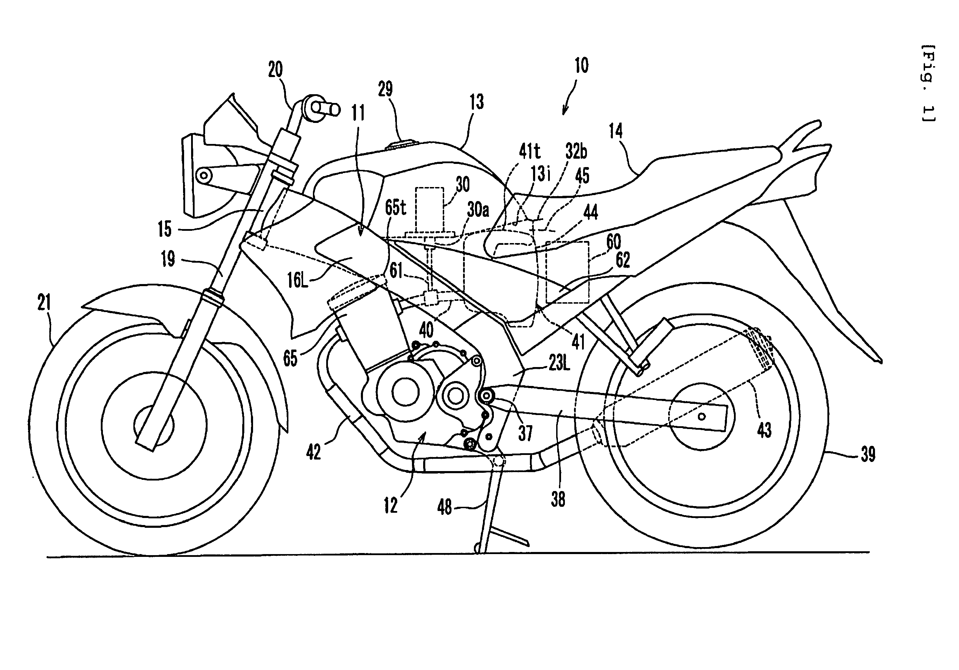

As shown in Fig. 1, a straddle-type vehicle according to the embodiment is a so-called motorcycle 10. The motorcycle 10 comprises a vehicle body frame 11, a water cooled single-cylinder engine 12 suspended from and supported on the vehicle body frame 11, a fuel tank 13 supported on the vehicle body frame 11, and a seat 14. The seat 14 is arranged rearwardly of the fuel tank 13.

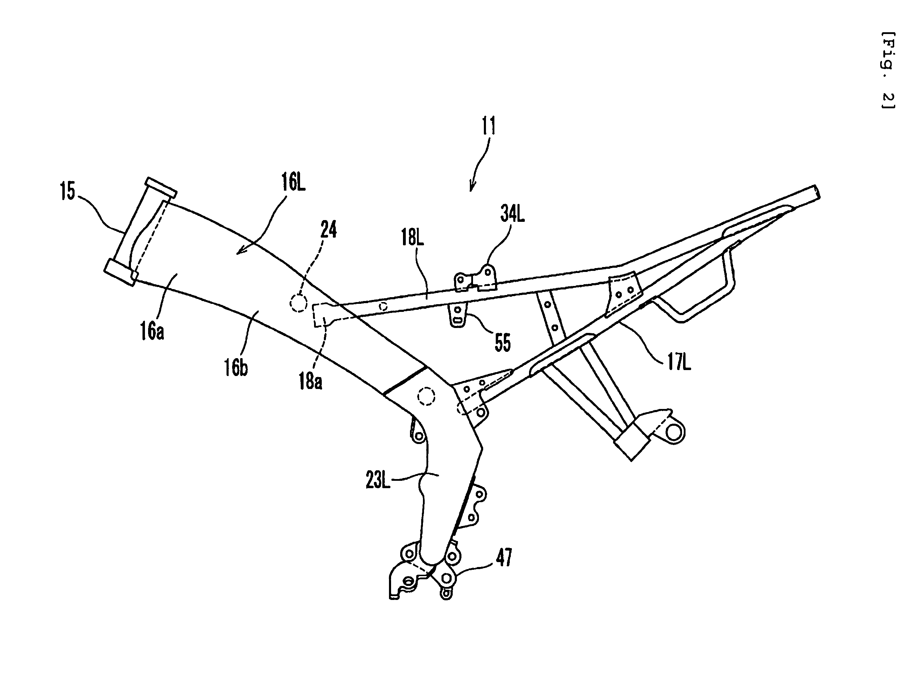

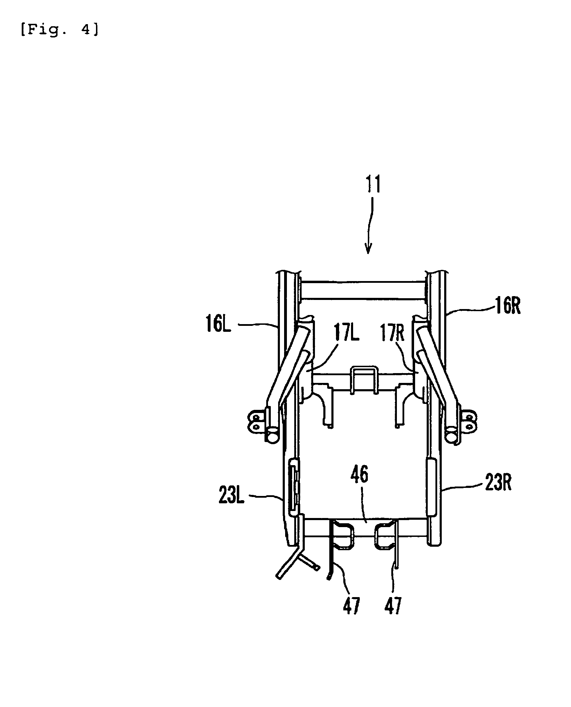

As shown in Figs. 2 to 4, the vehicle body frame 11 comprises a steering head pipe 15, a pair of left and right main frames 16L, 16R extending rearward and obliquely downward from the steering head pipe 15, rear arm brackets 23L, 23R joined to rear portions of the main frames 16L, 16R, a pair of left and right back stays 17L, 17R extending rearward and obliquely upward from the rear arm brackets 23L, 23R, and a pair of left and right seat rails 18L, 18R extending rearward and obliquely upward from intermediate portions of the main frames 16L, 16R. Rear ends of the back stays 17L, 17R are connected to rear portions of the seat rails 18L, 18R.

As shown in Fig. 1, a front fork 19 is supported on the steering head pipe 15 to be able to swing. A steering handle 20 is provided at an upper end of the front fork 19 and a front wheel 21 is supported rotatably at a lower end thereof.

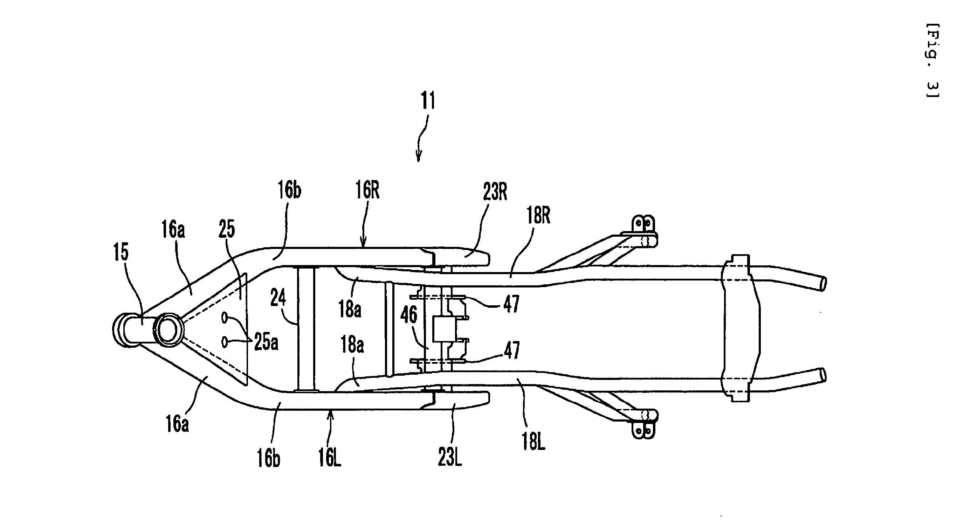

As shown in Figs. 2 and 3, the main frames 16L, 16R are frame members, of which a thickness in a vertical direction is larger than that in a left and right direction (vehicle width direction), and which are formed to assume a rectangular cylinder having a cross sectional profile, which is lengthy in a vertical direction. As shown in Fig. 3, the both main frames 16L, 16R separate from each other as it goes toward central portions 16b from front sides 16a, and are substantially in parallel as viewed in plan view over an extent from the central portion 16b to a rear side. As shown in Fig. 2, the front sides 16a of the main frames 16L, 16R have a vertical thickness substantially equal to a vertical length of the steering head pipe 15. Also, the main frames 16L, 16R are decreased in vertical thickness as it goes toward the central portions 16b from the front sides 16a.

As shown in Fig. 3, a cross member 24 extending in a left and right direction (vehicle width direction) bridges the central portion 16b of the left main frame 16L and the central portion 16b of the right main frame 16R. Front ends 18a of the seat rails 18L, 18R are connected to a neighborhood of connections of the main frames 16L, 16R to the cross member 24 (see Fig. 2).

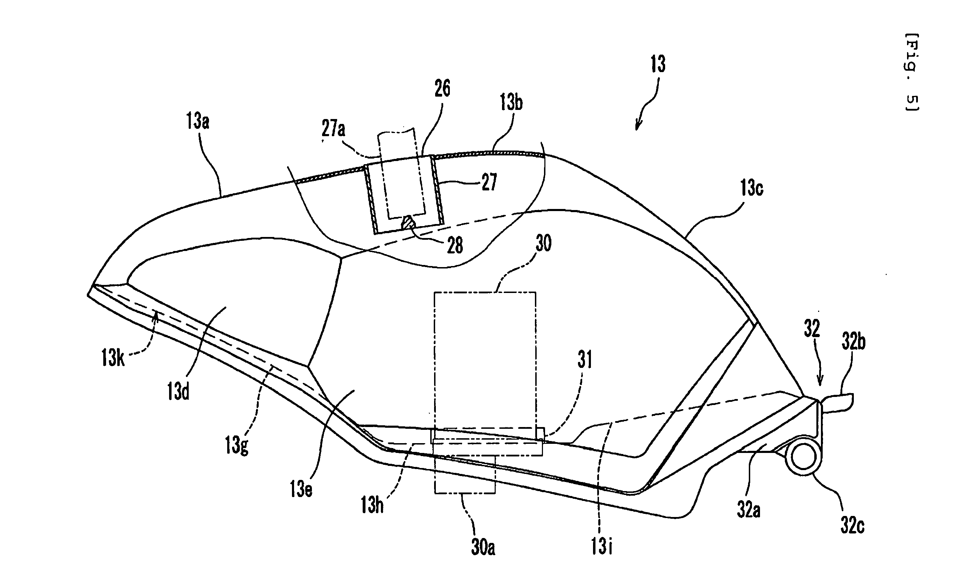

As shown in Fig. 5, the fuel tank 13 comprises a front, upper surface 13a inclined obliquely and forwardly downward, and a rear, upper surface 13c inclined obliquely and rearwardly downward. A boundary portion of the front, upper surface 13a and the rear, upper surface 13c forms an upper end 13b positioned uppermost on an upper surface of the fuel tank 13. Formed on both left and right sides of the fuel tank 13 are a front side 13d, which projects laterally as it goes rearward, and a rear side 13e, which projects laterally as it goes forward. The rear side 13e defines a surface adjacent to crew's knees when a crew rides. Therefore, a crew opens knees suitably to be able to assume a posture along the fuel tank 13, so that a crew can ride in a comfortable posture.

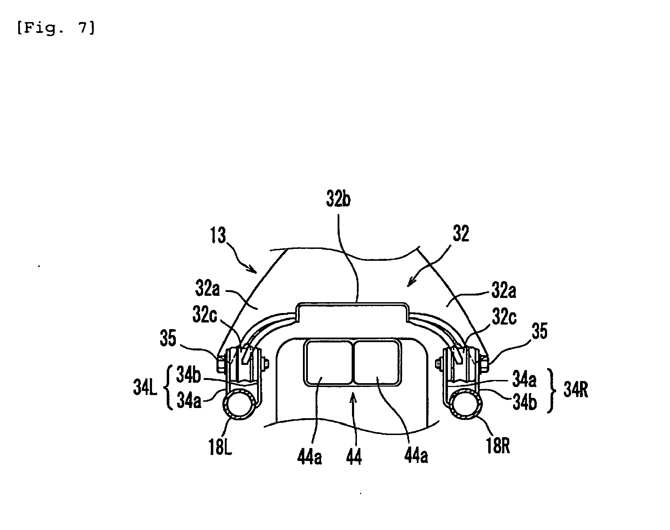

As shown in Fig. 7, a recess 32 dented upward as viewed from the rear is formed on a rear portion of the fuel tank 13. Specifically, the recess 32 on the rear of the fuel tank 13 comprises curved pieces 32a extending obliquely downward toward both left and right sides thereof from a central side thereof as viewed from the rear, and a projecting piece 32b positioned between the both curved pieces 32a and projecting rearward (see Fig. 5). Ring-shaped brackets 32c are provided at lower ends of the both curved pieces 32a.

While the projecting piece 32b and the curved pieces 32a may be connected smoothly together, the projecting piece 32b projects above the curved pieces 32a according to the embodiment, so that a step is provided between the projecting piece 32b and the curved pieces 32a. Therefore, the projecting piece 32b is arranged in a higher position than the curved pieces 32a are, and a large space is ensured below the projecting piece 32b.

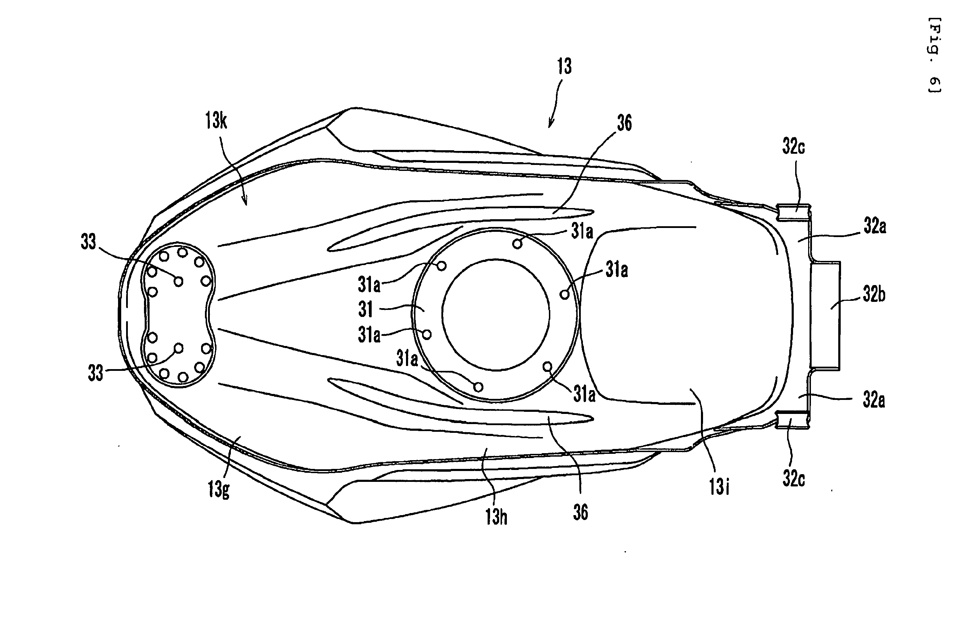

Subsequently, an explanation will be given to a mount structure of the fuel tank 13. As shown in Fig. 3, a bracket 25 being substantially triangular-shaped as viewed in plan view is joined to upper sides of the front sides 16a of the main frames 16L, 16R. Mount holes 25a are formed on the bracket 25. On the other hand, as shown in Fig. 6, mount holes 33 are formed on a bottom plate 13k of the fuel tank 13 to correspond to the respective mount holes 25a of the bracket 25. A front portion of the fuel tank 13 is fixed to the main frames 16L, 16R through the bracket 25 by clamping fasteners (not shown), such as bolts, etc., to the mount holes 25a and the mount holes 33.

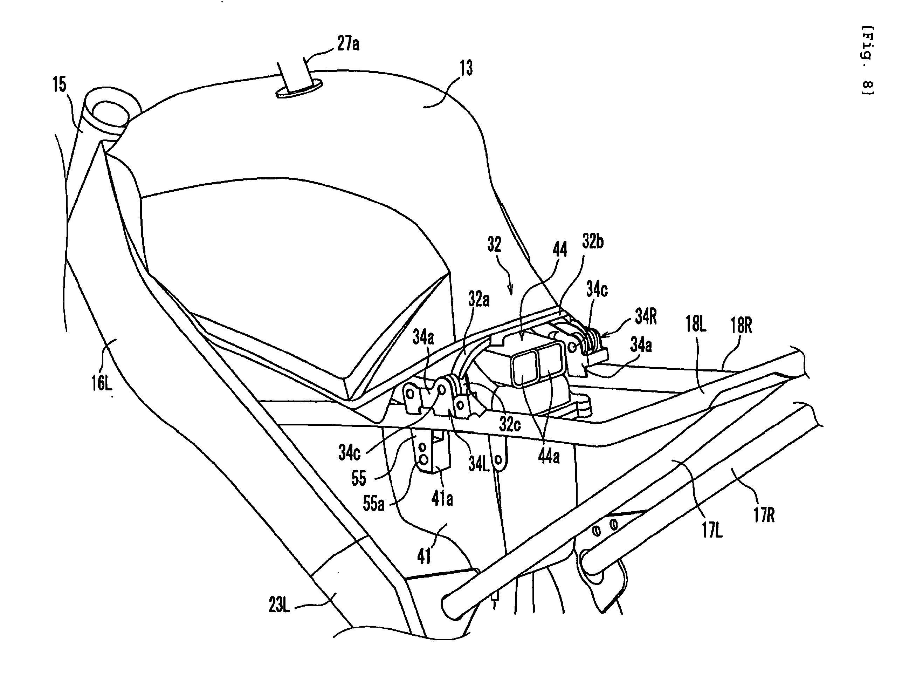

As shown in Fig. 8, brackets 34L, 34R, respectively, extending upward are joined to intermediate portions of the seat rails 18L, 18R. As shown in Fig. 7, the respective brackets 34L, 34R comprise a pair of projecting pieces 34a, 34b, which are adjacent to each other at a predetermined interval in a left and right direction, and the both projecting pieces 34a, 34b project above the seat rails 18L, 18R. In addition, the both projecting pieces 34a, 34b may be formed integral with, or separately from each other. Mount holes 34c (see Fig. 8) are formed on the both projecting pieces 34a, 34b to permit fasteners such as bolts, etc. to extend therethrough. As shown in Fig. 7, the left and right brackets 32c of the fuel tank 13 are inserted between the both projecting pieces 34a, 34b of the brackets 34L, 34R of the seat rails 18L, 18R. Fasteners 35, such as bolts, etc., extending through the mount holes 34c of the both projecting pieces 34a, 34b and the brackets 32c mount the rear portion of the fuel tank 13 to the brackets 34L, 34R.

In addition, the fuel tank 13 is mounted to the brackets 34L, 34R to be able to turn. Therefore, in a state, in which the front portion of the fuel tank 13 is not fixed to the main frames 16L, 16R, the fuel tank 13 can be turned about the brackets 32c. Thereby, the work for vehicular parts, etc. arranged below the fuel tank 13 is facilitated by turning the fuel tank 13 rearward to put the same in an upright state relative to the seat rails 18L, 18R.

As shown in Fig. 5, a fuel pump 30 is arranged in the fuel tank 13. The fuel pump 30 is positioned substantially centrally of the fuel tank 13 in a longitudinal direction (left and right direction in Fig. 5). An oil filler hole 26 is formed on the front, upper surface 13a of the fuel tank 13. A cylinder 27 having substantially the same diameter as that of the oil filler hole 26 is provided inside the oil filler hole 26. A stopper 28 extending in a left and right direction bridges a lower end of the cylinder 27 so as to prevent a fuel oil gun 27a from contacting with the fuel pump 30 at the time of fueling. Thereby, when the fuel oil gun 27a is inserted from the oil filler hole 26, a tip end of the fuel oil gun 27a contacts with the stopper 28 to inhibit excessive insertion of the fuel oil gun 27a. In addition, the oil filler hole 26 is closed by a lid 29 (see Fig. 1) except at the time of fueling.

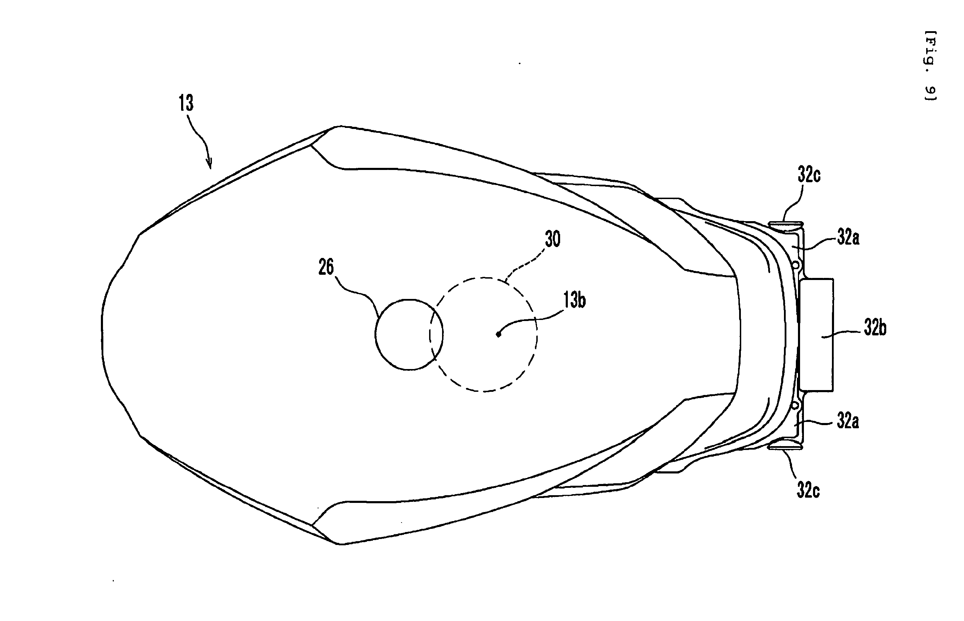

As shown in Fig. 9, the upper end 13b of the fuel tank 13 and the fuel pump 30 overlap each other as viewed in plan view. That is, the fuel pump 30 is arranged in the vicinity of the upper end 13b of the fuel tank 13 and arranged in that portion of an interior of the fuel tank 13, in which a most space is arranged upward (also, see Fig. 5).

As shown in Fig. 5, the bottom plate 13k of the fuel tank 13 comprises a front bottom surface 13g inclined obliquely and forwardly upward, a substantially horizontal, central bottom surface 13h, and a rear bottom surface 13i inclined obliquely and forwardly downward. In addition, the mount holes 33 (see Fig. 6) described above are formed on the front bottom surface 13g. The central bottom surface 13h is positioned in a lower location than the front bottom surface 13g and the rear bottom surface 13i are.

As shown in Fig. 6, the central bottom surface 13h is formed with a mount seat 31, to which the fuel pump 30 is mounted. The mount seat 31 is formed to assume a shape of an annular ring. A plurality (six in the embodiment) of mount holes 31a are arranged circumferentially every predetermined interval on the mount seat 31. As shown in Fig. 5, the fuel pump 30 is inserted into the fuel tank 13 from a central opening of the mount seat 31 and then mounted to the mount seat 31 by clamping fasteners, such as bolts, etc., to the mount holes 31 a. Accordingly, the fuel pump 30 is mounted in a low location in the fuel tank 13.

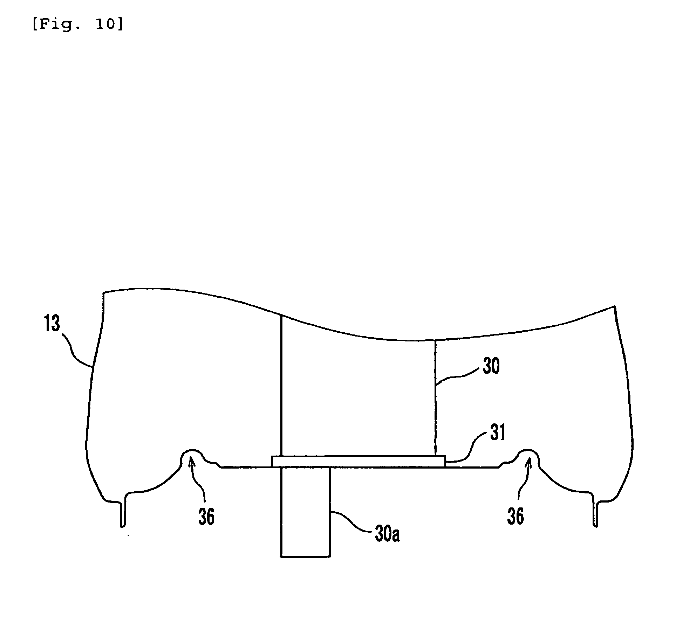

As shown in Fig. 6, grooves (beads) 36 dented upward are formed on both left and right sides of the mount seat 31 on the bottom plate 13k of the fuel tank 13 (also, see Fig. 10). The grooves 36 extend in a lengthwise direction (longitudinal direction) of the fuel tank 13.

As shown in Fig. 1, a pivot shaft 37 is provided on the rear arm brackets 23L, 23R, and a front end of a rear arm 38 is supported on the pivot shaft 37 to be able to turn. On the other hand, a rear wheel which is a driving wheel is supported on a rear end of the rear arm 38 to be able to turn.

The engine 12 is supported on the main frames 16L, 16R and the rear arm brackets 23L, 23R. The engine 12 comprises a cylinder 65 extending forward and obliquely upward. In addition, the cylinder referred to herein means a whole including a cylinder body and a cylinder head. Also, the cylinder 65 is not necessarily required to extend obliquely upward but may extend upward. An air cleaner 41 is connected through an intake pipe 40 to the cylinder 65 and a muffler 43 is connected thereto through an exhaust pipe 42.

One end of the intake pipe 40 is connected to the cylinder 65 and the other end of the intake pipe 40 is connected to the air cleaner 41. The intake pipe 40 is arranged in a lower position than both an upper end 65t of the cylinder 65 and an upper end 41 t of the air cleaner 41 are.

A connection 30a connected to a fuel supply pipe 61 is formed at a lower end of the fuel pump 30. A fuel discharged from the fuel pump 30 is conveyed to the fuel supply pipe 61 via the connection 30a to be supplied to the intake pipe 40 through the fuel supply pipe 61. As shown in Fig. 1, the connection 30a is arranged in a higher position (a higher position than that, in which the main frames 16L, 16R are arranged, with the same longitudinal position as a reference) than that, in which the main frames 16L, 16R are arranged, as viewed in side view.

A side cover 62 is mounted to a side of the vehicle body frame 11. The side cover 62 covers at least a part of a side of the connection 30a. Therefore, the connection 30a cannot be visually recognized from outside.

The air cleaner 41 is formed to assume a so-called vertically longitudinal, substantially rectangular parallelopiped. A vertical length of the air cleaner 41 is larger than both a longitudinal length thereof and a left and right length thereof. In addition, the vertical length, the longitudinal length, and the left and right length mean maximum lengths in a vertical direction, in a longitudinal direction, and in a left and right direction. The intake pipe 40 is connected to a bottom of a front surface of the air cleaner 41 and an intake portion 44 is formed above a rear side of the air cleaner 41 (see Fig. 8) to permit an air to be drawn from the rear. The intake portion 44 is formed with an intake port 44a, which is opened rearward, and the air cleaner 41 sucks an air from rearward.

The air cleaner 41 is arranged below the rear portion of the fuel tank 13. More specifically, as shown in Fig. 1, the air cleaner 41 is arranged below the rear bottom surface 13i of the fuel tank 13. By the way, according to the embodiment, the rear portion of the fuel tank 13 is supported through the brackets 34L, 34R on the seat rails 18L, 18R and no cross member is present between the left and right seat rails 18L, 18R to support the rear portion of the fuel tank 13. Therefore, it is possible to arrange the air cleaner 41 upward relative to a conventional arrangement, or to lengthen the vertical length of the air cleaner 41 (see Fig. 8). As shown in Fig. 8, according to the embodiment, the upper end 41t (not shown in Fig. 8. See Fig. 1) of the air cleaner 41 projects above the seat rails 18L, 18R. Also, the upper end 41t of the air cleaner 41 is positioned above upper ends of the brackets 34L, 34R. Consequently, the fuel tank 13 and the air cleaner 41 do not overlap each other as viewed in side view.

As shown in Fig. 8, downwardly extending brackets 55 are joined to the seat rails 18L, 18R. Outwardly extending mounts 41 a are formed on both left and right sides of the air cleaner 41. The brackets 55 and the mounts 41a are formed with mount holes 55a, through which fasteners, such as bolts, etc., are inserted, and the air cleaner 41 is fixed to the brackets 55 by means of the fasteners. According to the embodiment, the air cleaner 41 is supported only on the seat rails 18L, 18R through the brackets 55.

As shown in Fig. 7, the intake portion 44 of the air cleaner 41 is arranged below the recess 32 on the rear of the fuel tank 13 and especially positioned just below the projecting piece 32b of the fuel tank 13 as viewed from the rear. The projecting piece 32b is extended rearwardly of the intake portion 44 to cover a region above the intake portion 44.

As shown in Fig. 1, the seat 14 is supported on the seat rails 18L, 18R (see Figs. 2 and 3) through brackets, etc. (not shown). The seat 14 is formed in a saddle-like manner and the seat 14 is formed on a back side thereof with a forwardly projecting piece 45, which covers a region above the intake portion 44 of the air cleaner 41 and enters below the projecting piece 32b of the fuel tank 13.

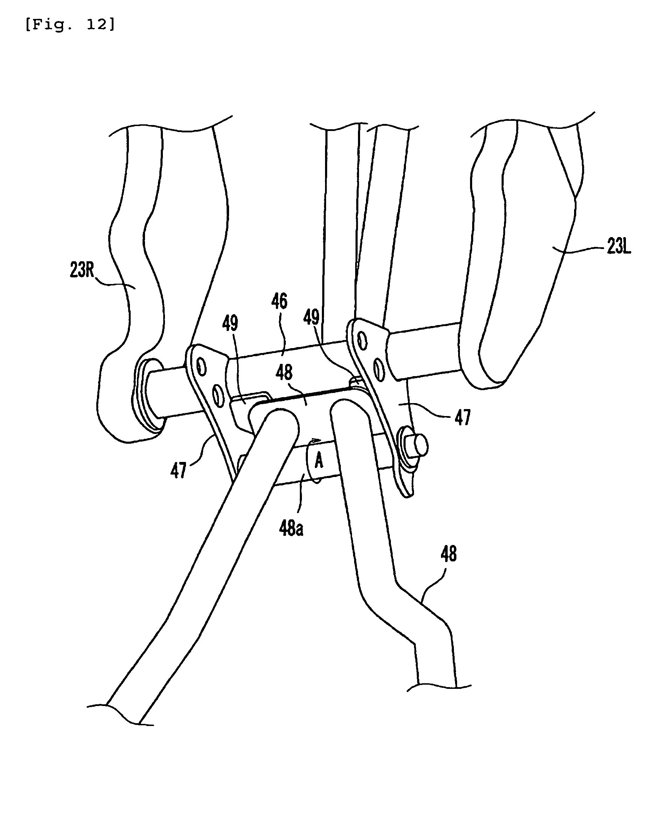

As shown in Fig. 12, a cross member 46 extending in a left and right direction bridges lower ends of the left and right, rear arm brackets 23L, 23R. A pair of left and right brackets 47 are joined to the cross member 46 to suspend the engine 12 therefrom. Also, a turning shaft 48a of a main stand 48 is supported on the brackets 47 to be able to turn. That is, with the motorcycle 10, the brackets 47 serve as brackets for the engine 12 and brackets for the main stand 48. In other words, brackets for the engine 12 and brackets for the main stand 48 are made common to each other.

As shown in Fig. 12, link brackets 49 are joined to the brackets 47, the link brackets 49 also functioning as stoppers for the main stand 48. That is, when the main stand 48 is turned from an accommodated state toward an upright state (turned in a A direction in the figure), a stopper 48b of the main stand 48 abuts against the link brackets 49 whereby excessive turning of the main stand 48 is inhibited and the main stand 48 is held in a predetermined position.

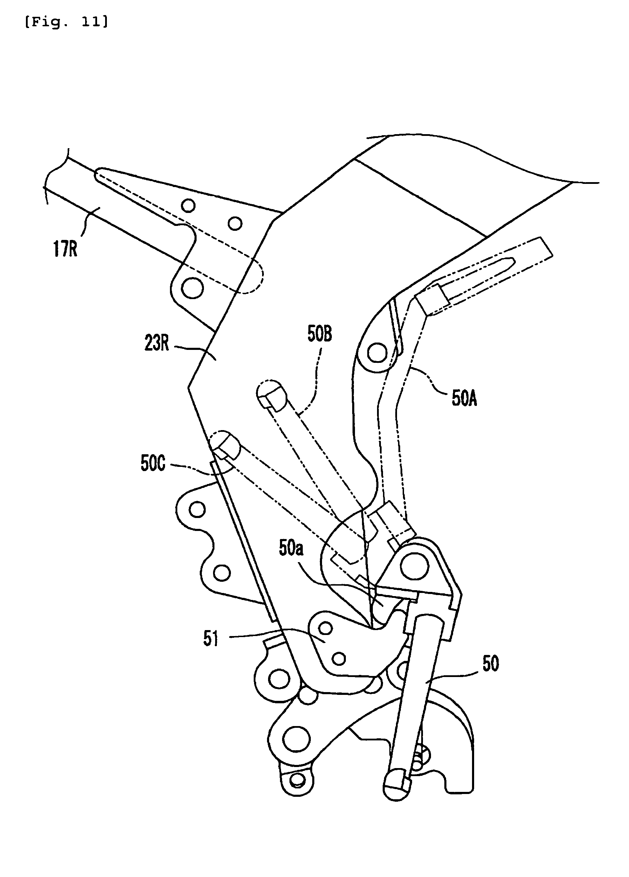

Fig. 11 is a side view showing the right, rear arm bracket 23R of the motorcycle 10. A kick pedal 50 is arranged forwardly of a lower half of the rear arm bracket 23R. Also, a stopper 51 is fixed to a lower end of the rear arm bracket 23R to inhibit excessive turning of the kick pedal 50. At the time of kicking, a crew develops the kick pedal 50 from the accommodated state (state indicated by the reference numeral 50A) to step on the kick pedal 50. Consequently, the kick pedal 50 is turned counterclockwise as viewed from a right side. When the kick pedal 50 is turned a predetermined angle or more, a stopper portion 50a of the kick pedal 50 abuts against the stopper 51, so that excessive turning of the kick pedal 50 is inhibited. In addition, the reference numeral 50B indicates a state, in which the kick pedal 50 is developed from the accommodated state, and the reference numeral 50C indicates a state, in which the kick pedal 50 is in the course of turning.

By the way, in the case where the stopper 51 for the kick pedal 50 is provided on a crank case of the engine 12, the stopper 51 gets in the way to be liable to cause restrictions on a position of the pivot shaft 37, or the like. In contrast, according to the embodiment, the stopper 51 is mounted not on a side of the engine 12 but on a side (strictly, the rear arm bracket 23R) of the vehicle body frame 11. Accordingly, restrictions on a position of the pivot shaft 37, or the like become less, so that freedom in layout is increased.

As described above, with the motorcycle 10 according to the embodiment, the mount seat 31 of the fuel tank 13 is provided on that portion (the central bottom surface 13h) of the bottom plate 13k of the fuel tank 13, which is lower than a portion (the rear bottom surface 13i) positioned above the air cleaner 41. Therefore, a fuel accumulated on the rear bottom surface 13i in the fuel tank 13 naturally flows down toward the central bottom surface 13h. Accordingly, no fuel is retained on the rear bottom surface 13i, so that it is possible to reduce an ineffective residue of the fuel.

Also, according to the embodiment, since it is not necessary to provide any external pipe line below the fuel tank 13, it is possible to achieve simplification of a construction of a fuel supply system. Also, since the fuel pump 30 is arranged in a position except above the air cleaner 41, it is possible to avoid interference between the fuel pump 30 and the air cleaner 41 to achieve an increase in volume of the air cleaner 41 without being obstructed by the fuel pump 30 and its piping (for example, the fuel supply pipe 61, etc.).

Also, according to the embodiment, the fuel pump 30 is positioned substantially centrally of the fuel tank 13 in the longitudinal direction. Therefore, fluctuation of a fuel in liquid level becomes small in the vicinity of the fuel pump 30. Accordingly, it is possible to stably supply a fuel from the fuel pump 30.

Also, the motorcycle 10 comprises the pair of left and right main frames 16L, 16R, respectively, of which a thickness in the vertical direction is larger than that in the vehicle width direction, and the connection 30a of the fuel pump 30 is arranged in a higher position than that, in which the main frames 16L, 16R are arranged, as viewed in side view. Accordingly, when the work for connection of pipes or wiring, or the like for the connection 30a is performed, the main frames 16L, 16R do not get in the way. Accordingly, it is possible to heighten the working efficiency.

Also, the motorcycle 10 comprises the side cover 62, which covers at least a part of the side of the connection 30a of the fuel pump 30. Therefore, it is possible to protect the connection 60a and to maintain an outward appearance favorable.

Also, according to the embodiment, the cylinder 65 of the engine 12 extends obliquely upward and the intake pipe 40 is arranged in a lower position than that, in which both the upper end 65t of the cylinder 65 and the upper end 41t of the air cleaner 41 are arranged. Therefore, an empty space is existent above the intake pipe 40. The fuel pump 30 is positioned between the cylinder 65 and the air cleaner 41 with respect to a longitudinal position to be arranged in the empty space. Accordingly, it is possible to promote arranging the fuel pump 30 efficiently (arrangement, in which a waste space is restricted). Also, it becomes possible to arrange the fuel pump 30 in a relatively low position.

Further, according to the embodiment, the engine 12 is a single cylinder engine. Generally, a motorcycle 10 with a single cylinder engine mounted thereon possesses a running characteristic, which is tenacious at the time of low rotation, and the intake pipe 40 is preferably lengthened in order to further make the best use of the characteristic. Here, when the intake pipe 40 is to be lengthened, an empty space above the intake pipe 40 is further enlarged, so that it is possible to further heighten freedom in arranging the fuel pump 30.

As described above, the motorcycle 10 comprises the pair of left and right main frames 16L, 16R, respectively, of which a thickness in the vertical direction is larger than that in the vehicle width direction. The provision of the main frames 16L, 16R of this kind makes heat liable to work below the front portion of the fuel tank 13 but the fuel pump 30 is not present below the front portion of the fuel tank 13 in the embodiment. Therefore, a passage for introduction of a travel wind is defined below the front portion of the fuel tank 13 and a travel wind flowing through the passage provides cooling below the front portion of the fuel tank 13. Accordingly, although the main frames 16L, 16R having a large thickness in the vertical direction are provided, it is possible to inhibit heat from working between the main frames 16L, 16R.

Also, according to the embodiment, a top of the fuel pump 30 overlaps the upper end 13b of the fuel tank 13 as viewed in plan view. That is, the fuel pump 30 is positioned in the vicinity of that portion of the upper surface of the fuel tank 13, which is positioned in a highest location. Therefore, a margin is produced in a space, in which the fuel pump 30 is mounted, so that it becomes possible to make use of even a relatively large-sized pump. Accordingly, freedom is increased in selecting the fuel pump 30.

According to the embodiment, the oil filler hole 26 of the fuel tank 13 is positioned forwardly of the fuel pump 30 with respect to a longitudinal position. Accordingly, there is less fear that the fuel oil gun 27a inserted from the oil filler hole 26 damages the fuel pump 30 at the time of fueling.

Also, the stopper 28 is provided on the fuel tank 13 to inhibit insertion of the fuel oil gun 27a over a predetermined extent. Accordingly, it is possible to surely prevent contact between the fuel oil gun 27a and the fuel pump 30.

Also, according to the embodiment, the grooves (beads) 36 dented upward are formed outwardly of the mount seat 31 on the bottom plate 13k of the fuel tank 13. Therefore, when a residual quantity of a fuel is decreased, a fuel once getting over the beads 36 due to left and right movements of a vehicle or the like can be held around the mount seat 31, so that it is possible to stably supply a fuel from the fuel pump 30. Also, when the fuel tank 13 is to be molded, the grooves 36 can absorb excess thickness of a material for the tank. That is, when a wall left over at the time of press working or the like loses a place to go to, there is a fear to lead to generation of wrinkles and crazing, but it is possible according to the embodiment that the grooves 36 can absorb a wall left over. Accordingly, it is possible to prevent generation of wrinkles, crazing, or the like in the fuel tank 13 at the time of molding to improve manufacture of the fuel tank 13 in yield.

In addition, a straddle-type vehicle according to the embodiment is not limited to motorcycles but may be other straddle-type vehicles such as four-wheeled buggy, or the like.

As described above, the embodiment is useful for straddle-type vehicles such as motorcycles, etc.

The description above discloses (amongst others) an embodiment of a straddle-type vehicle comprising a fuel tank including a bottom plate formed with a mount seat, to which a fuel tank is mounted, a seat arranged rearwardly of the fuel tank, an air cleaner arranged below a rear portion of the fuel tank, and a fuel pump mounted to the mount seat and having at least a part thereof accommodated in the fuel tank, and wherein the mount seat is provided on that portion of the bottom plate of the fuel tank, which is lower than a portion positioned above the air cleaner.

With the straddle-type vehicle, the mount seat, to which a fuel tank is mounted, is provided on that portion of the bottom plate (In addition, a shape of the bottom plate is not limited to a shape of a flat plate but may of course comprise an irregular portion and a curved portion) of the fuel tank, which is lower than a portion positioned above the air cleaner, so that a fuel accumulated in an upper portion of the air cleaner in the fuel tank naturally flows down toward the mount seat. Therefore, a fuel is not accumulated in the portion, so that an ineffective residue of a fuel is reduced. Also, since there is no need of providing any external pipe line below the fuel tank, it is possible simplify a construction of a fuel supply system. Also, even when the fuel pump is not arranged above the air cleaner, an ineffective residue of a fuel can be reduced, so that interference of the fuel tank (and its piping or the like) with the air cleaner can be avoided by arranging the fuel pump in a position except above the air cleaner. Accordingly, it is possible to achieve an increase in volume of the air cleaner without restrictions by the fuel pump or the like.

According to the embodiment, it is possible to reduce an ineffective residue of a fuel, simplify a construction of a fuel supply system and achieve an increase in volume of an air cleaner in a straddle-type vehicle, in which a seat is arranged rearwardly of a fuel tank and the air cleaner is mounted below a rear portion of the fuel tank.

The description further discloses, according to a first preferred aspect, an embodiment of a straddle-type vehicle comprising a fuel tank including a bottom plate formed with a mount seat, to which a fuel tank is mounted, a seat arranged rearwardly of the fuel tank, an air cleaner arranged below a rear portion of the fuel tank, and a fuel pump mounted to the mount seat and having at least a part thereof accommodated in the fuel tank, and wherein the mount seat is provided on that portion of the bottom plate of the fuel tank, which is lower than a portion positioned above the air cleaner.

Further, according to a second preferred aspect, the fuel tank is positioned substantially centrally of the fuel tank in a longitudinal direction.

Further, according to a third preferred aspect, the straddle-type vehicle might further comprise a pair of left and right frame members, respectively, of which a thickness in a vertical direction is larger than that in a left and right direction, and a fuel supply passage, through which a fuel discharged from the fuel pump is led, and wherein a connection is formed on a lower portion of the fuel pump to be connected to the fuel supply passage, and the connection is arranged in a higher position than the frame members as viewed in side view.

Further, according to a fourth preferred aspect, the straddle-type vehicle might further comprise a side cover, which covers at least a part of a side of the connection.

Further, according to a fifth preferred aspect, the straddle-type vehicle might further comprise an engine arranged forwardly of the air cleaner and having a cylinder extending upward or obliquely upward, and an intake passage connected to the cylinder and the air cleaner and arranged in a lower position than an upper end of the cylinder and an upper end of the air cleaner, and wherein the fuel pump is positioned between the cylinder and the air cleaner with respect to a longitudinal position.

Further, according to a sixth preferred aspect, the engine is a single cylinder engine.

Further, according to a seventh preferred aspect, the straddle-type vehicle might further comprise a pair of left and right frame members, respectively, of which a thickness in a vertical direction is larger than that in a left and right direction.

Further, according to an eighth preferred aspect, the fuel tank comprises a top positioned in an uppermost side, and a top of the fuel tank and a top of the fuel pump overlap each other as viewed in plan view.

Further, according to a ninth preferred aspect, the fuel tank is formed with an oil filler hole, which is positioned forwardly of the fuel pump.

Further, according to a tenth preferred aspect, the fuel tank is formed with an oil filler hole, and the fuel tank comprises a stopper, which inhibits insertion of a fuel oil gun over a predetermined extend into the oil filler hole.

Further, according to an eleventh preferred aspect, a recess dented upward is formed on the bottom plate of the fuel tank to be outside the mount seat in a left and right direction.

According to a particularly preferred aspect, in order to reduce an ineffective residue of a fuel, simplify a construction of a fuel supply system and achieve an increase in volume of an air cleaner in a straddle-type vehicle, in which a seat is arranged rearwardly of a fuel tank and the air cleaner is mounted below a rear portion of the fuel tank, there is disclosed an embodiment of a fuel tank 13 comprising a bottom plate 13k formed with a mount seat 31, to which a fuel pump 30 is mounted. A seat is arranged rearwardly of the fuel tank 13 and an air cleaner is arranged below a rear portion of the fuel tank 13. The mount seat 31 is provided on that portion (a central bottom surface) 13h of the bottom plate 13k of the fuel tank 13, which is lower than a portion (a rear bottom surface) 13i positioned above the air cleaner.

## Claims

1. Straddle-type vehicle comprising a head pipe connected to a pair of left and right main frames (16L, 16R), a fuel tank (13) arranged to said main frames (16L, 16R),
a seat arranged rearwardly of the fuel tank (13), an air cleaner (41) arranged below the fuel tank (13), and a fuel pump (30) mounted to a mount seat (31) formed in a bottom plate (13k) of the fuel tank (13), wherein at least part of the fuel pump (30) is accommodated in the fuel tank (13), the mount seat (31) is provided on a portion (13h) of the bottom plate (13k) of the fuel tank (13), which is arranged lower than a portion (13i) of the fuel tank (13) positioned above the air cleaner (41),
**characterized In that**
the air cleaner (41) arranged below a rear portion (13i) of the fuel tank (13) and the mount seat (31) is arranged forward of said rear portion (13i) of the fuel tank (13) positioned above the air cleaner (41).

2. Straddle-type vehicle according to claim 1, **characterized in that** the fuel pump (30) is positioned substantially centrally of the fuel tank (13) in a longitudinal direction.

3. Straddle-type vehicle according to claim 1 or 2, **characterized in that** the mount seat (31) of the fuel tank (13) is provided on the central bottom surface (13h) of the bottom plate (13k) of the fuel tank (13), which is lower than the rear bottom surface (13i) positioned above the air cleaner (41).

4. Straddle-type vehicle according to one of the claims 1 to 3, **characterized by** a pair of left and right frame members (16L,16R), respectively, of which a thickness in a vertical direction is larger than that in a left and right direction.

5. Straddle-type vehicle according to one of the claims 1 to 4, **characterized by** a fuel supply passage (61), through which a fuel discharged from the fuel pump (30) is led, wherein a connection (30a) is formed on a lower portion of the fuel pump (30) to be connected to the fuel supply passage (61).

6. Straddle-type vehicle according to claim 5, **characterized in that** the connection (30a) is arranged in a higher position than the frame members (16L,16R) as viewed in side view.

7. Straddle-type vehicle according to claim 5 or 6, **characterized by** a side cover (62), which covers at least a part of a side of the connection (30a).

8. Straddle-type vehicle according to one of the claims 1 to 7, **characterized by** an engine (12) arranged forwardly of the air cleaner (41) and having a cylinder (65) extending upward or obliquely upward, and
an intake passage (40) connected to the cylinder (65) and the air cleaner (41) and arranged in a lower position than an upper end (65t) of the cylinder (65) and an upper end (41 t) of the air cleaner (41),
wherein the fuel pump (30) is positioned between the cylinder (65) and the air cleaner (41) with respect to a longitudinal position.

9. Straddle-type vehicle according to claim 8, **characterized in that** the engine (12) is a single cylinder engine.

10. Straddle-type vehicle according to one of the claims 1 to 9, **characterized in that** the fuel tank (13) comprises a top (13b) positioned in an uppermost side, and the top (13b) of the fuel tank (13) and a top of the fuel pump (30) overlap each other as viewed in plan view.

11. Straddle-type vehicle according to one of the claims 1 to 10, **characterized in that** the fuel tank (13) is formed with an oil filler hole (26).

12. Straddle-type vehicle according to claim 11, **characterized in that** the oil filler hole (26) is positioned forwardly of the fuel pump (30).

13. Straddle-type vehicle according to claim 11 or 12, **characterized in that** the fuel tank (13) comprises a stopper (28), which inhibits insertion of a fuel oil gun (27a) over a predetermined extend into the oil filler hole (26).

14. Straddle-type vehicle according to one of the claims 1 to 13, **characterized in that** a recess (32) dented upward is formed on the bottom plate (13k) of the fuel tank (13) to be outside the mount seat (31) in a left and right direction.

15. Straddle-type vehicle according to one of the claims 1 to 14, **characterized in that** the fuel pump (30) is positioned substantially centrally of the fuel tank (13) in width direction of the vehicle.

## Patentansprüche

1. Fahrzeug vom Grätschsitz- Typ, aufweisend ein Kopfrohr, verbunden mit einem Paar von linken und rechten Hauptrahmen (16L, 16R), einen Kraftstofftank (13), angeordnet an den Hauptrahmen (16L, 16R), einen Sitz, angeordnet hinter dem Kraftstofftank (13), einen Luftreiniger (41), angeordnet unter dem Kraftstofftank (13), und eine Kraftstoffpumpe (30), montiert an einem Montagesitz (31), gebildet in einer Bodenplatte (13k) des Kraftstofftanks (13), wobei zumindest ein Teil der Kraftstoffpumpe (30) in dem Kraftstofftank (13) untergebracht ist, der Montagesitz (31) an einem Abschnitt (13h) der Bodenplatte (13k) des Kraftstofftanks (13) vorgesehen ist, der niedriger als ein Abschnitt (13i) des Kraftstofftanks (13), positioniert oberhalb des Luftreinigers (41), angeordnet ist,
**dadurch gekennzeichnet, dass**
der Luftreiniger (41) unter einem hinteren Abschnitt (13i) des Kraftstofftanks (13) angeordnet ist und der Montagesitz (31) vor dem hinteren Abschnitt (13i) des Kraftstofftanks (13), positioniert oberhalb des Luftreinigers (41), angeordnet ist.

2. Fahrzeug vom Grätschsitz- Typ nach Anspruch 1, **dadurch gekennzeichnet, dass** die Kraftstoffpumpe (30) im Wesentlichen zentral des Kraftstofftanks (13) in einer Längsrichtung positioniert ist.

3. Fahrzeug vom Grätschsitz- Typ nach Anspruch 1 oder 2, **dadurch gekennzeichnet, dass** der Montagesitz (31) auf der zentralen Bodenoberfläche (13h) der Bodenplatte (134k) des Kraftstofftanks (13) vorgesehen ist, die niedriger ist als die hintere Bodenoberfläche (134i), positioniert oberhalb des Luftreinigers (41).

4. Fahrzeug vom Grätschsitz- Typ nach einem der Ansprüche 1 bis 3, jeweils **gekennzeichnet durch** ein Paar von linken und rechten Rahmenteilen (16L, 16R), deren eine Dicke in einer vertikalen Richtung größer als die in einer linken und rechten Richtung ist.

5. Fahrzeug vom Grätschsitz- Typ nach einem der Ansprüche 1 bis 4, **gekennzeichnet durch** einen Kraftstoffzuführungskanal (61), **durch** den ein Kraftstoff,
abgegeben von der Kraftstoffpumpe (30), geleitet wird, wobei eine Verbindung (30a) an einem unteren Abschnitt der Kraftstoffpumpe (30) gebildet ist, um mit dem Kraftstoffzuführungskanal (61) verbunden zu sein.

6. Fahrzeug vom Grätschsitz- Typ nach Anspruch 5, **dadurch gekennzeichnet, dass** die Verbindung (30a)in einer höheren Position als die Rahmenteile (16L, 16R), wie in Seitenansicht gesehen, angeordnet ist.

7. Fahrzeug vom Grätschsitz- Typ nach Anspruch 5 oder 6, **gekennzeichnet durch** eine Seitenabdeckung (62), die zumindest einen Teil einer Seite der Verbindung (30a) abdeckt.

8. Fahrzeug vom Grätschsitz- Typ nach einem der Ansprüche 1 bis 7, **gekennzeichnet durch** eine Brennkraftmaschine (12), angeordnet vor dem Luftreiniger (41) und mit einem Zylinder (65), der sich nach oben oder schräg nach oben erstreckt, und
einen Einlasskanal (40), verbunden mit dem Zylinder (65) und dem Luftreiniger (41), und in einer niedrigeren Position als ein oberes Ende (65t) des Zylinders und ein oberes Ende (41 t) des Luftreinigers (41)angeordnet,
wobei die Kraftstoffpumpe (30) zwischen dem Zylinder (65) und dem Luftreiniger (41) in Bezug auf eine Längsposition angeordnet ist.

9. Fahrzeug vom Grätschsitz- Typ nach Anspruch 8, **dadurch gekennzeichnet, dass** die Brennkraftmaschine (12) eine Einzelzylinder- Brennkraftmaschine ist.

10. Fahrzeug vom Grätschsitz- Typ nach einem der Ansprüche 1 bis 9, **dadurch gekennzeichnet, dass** der Kraftstofftank (13) aufweist eine Spitze (13b), positioniert in einer obersten Seite, und die Spitze (13b) des Kraftstofftanks (13) und die Spitze der Kraftstoffpumpe (30)sich einander überlappen, wenn in Draufsicht gesehen.

11. Fahrzeug vom Grätschsitz- Typ nach einem der Ansprüche 1 bis 10, **dadurch gekennzeichnet, dass** der Kraftstofftank (13) mit einer Ölfilterbohrung (26) gebildet ist.

12. Fahrzeug vom Grätschsitz- Typ nach Anspruch 11, **dadurch gekennzeichnet, dass** die Ölfilterbohrung (26) vor der Kraftstoffpumpe (30) positioniert ist.

13. Fahrzeug vom Grätschsitz- Typ nach Anspruch 11 oder 12, **dadurch gekennzeichnet, dass** der Kraftstofftank (13) einen Anschlag (28) aufweist, der das Einsetzen einer Kraftstoffölspritze (27a) über eine vorbestimmte Ausdehnung in die Ölfilterbohrung (26) verhindert.

14. Fahrzeug vom Grätschsitz- Typ nach einem der Ansprüche 1 bis 13, **dadurch gekennzeichnet, dass** eine Aussparung (32), erweitert nach oben, in der Bodenplatte (13k) des Kraftstofftanks (13) gebildet ist, um außerhalb des Montagesitzes (31) in einer linken und rechten Richtung zu sein.

15. Fahrzeug vom Grätschsitz- Typ nach einem der Ansprüche 1 bis 14, **dadurch gekennzeichnet, dass** die Kraftstoffpumpe (30) im Wesentlichen zentral des Kraftstofftanks (13) in Richtung der Breite des Fahrzeuges positioniert ist.

## Revendications

1. Véhicule du type à enfourcher, comprenant un tube supérieur qui est relié à une paire de cadres principaux gauche et droit (16L, 16R), un réservoir de carburant (13) qui est disposé sur les cadres principaux (16L, 16R), une selle qui est disposée à l'arrière du réservoir (13), un filtre à air (41) qui est disposé sous le réservoir (13), et une pompe à carburant (30) qui est montée sur un support de montage (31) formé dans une plaque de fond (13k) du réservoir (13), étant précisé qu'une partie au moins de la pompe à carburant (30) est logée dans le réservoir (13), que le support de montage (31) est prévu sur une partie (13h) de la plaque de fond (13k) du réservoir (13) qui est disposée plus bas qu'une partie (13i) du réservoir (13) placée au-dessus du filtre à air (41),
**caractérisé en ce que** le filtre à air (41) disposé au-dessous d'une partie arrière (13i) du réservoir de carburant (13) et du support de montage (31) est disposé à l'avant de la partie arrière (13i) du réservoir (13) placée au-dessus du filtre à air (41).

2. Véhicule du type à enfourcher selon la revendication 1, **caractérisé en ce que** la pompe à carburant (30) est placée globalement au centre du réservoir de carburant (13), dans un sens longitudinal.

3. Véhicule du type à enfourcher selon la revendication 1 ou 2, **caractérisé en ce que** le support de montage (31) du réservoir de carburant (13) est prévu sur la surface de fond centrale (13h) de la plaque de fond (13k) du réservoir (13) qui est située plus bas que la surface de fond arrière (13i) placée au-dessus du filtre à air (41).

4. Véhicule du type à enfourcher selon l'une des revendications 1 à 3, **caractérisé par** une paire d'éléments de cadre gauche et droit (16L, 16R), respectivement, dont une épaisseur dans un sens vertical est plus grande que dans un sens gauche-droit.

5. Véhicule du type à enfourcher selon l'une des revendications 1 à 4, **caractérisé par** un passage d'amenée de carburant (61) par lequel passe un carburant déchargé à partir de la pompe à carburant (30), étant précisé qu'une liaison (30a) est formée sur une partie inférieure de la pompe (30) pour être reliée au passage d'amenée de carburant (61).

6. Véhicule du type à enfourcher selon la revendication 5, **caractérisé en ce que** la liaison (30a) est disposée plus haut que les éléments de cadre (16L, 16R), vue de côté.

7. Véhicule du type à enfourcher selon la revendication 5 ou 6, **caractérisé par** un couvercle latéral (62) qui couvre une partie au moins d'un côté de la liaison (30a).

8. Véhicule du type à enfourcher selon l'une des revendications 1 à 7, **caractérisé par** un moteur (12) qui est disposé à l'avant du filtre à air (41) et qui a un cylindre (65) s'étendant vers le haut ou oblique vers le haut, et
un passage d'admission (40) qui est relié au cylindre (65) et au filtre à air (41) et qui est disposé plus bas qu'une extrémité supérieure (65t) du cylindre (65) et qu'une extrémité supérieure (41t) du filtre à air (41),
étant précisé que la pompe à carburant (30) est placée entre le cylindre (65) et le filtre à air (41) par rapport à une position longitudinale.

9. Véhicule du type à enfourcher selon la revendication 8, **caractérisé en ce que** le moteur (12) est un moteur monocylindre.

10. Véhicule du type à enfourcher selon l'une des revendications 1 à 9, **caractérisé en ce que** le réservoir de carburant (13) comprend un haut (13b) placé dans un côté supérieur, et **en ce que** le haut (13b) du réservoir (13) et un haut de la pompe à carburant (30) se recouvrent, vues de dessus.

11. Véhicule du type à enfourcher selon l'une des revendications 1 à 10, **caractérisé en ce que** le réservoir de carburant (13) est pourvu d'un orifice de remplissage (26).

12. Véhicule du type à enfourcher selon la revendication 11, **caractérisé en ce que** l'orifice de remplissage (26) est placé à l'avant de la pompe à carburant (30).

13. Véhicule du type à enfourcher selon la revendication 11 ou 12, **caractérisé en ce que** le réservoir de carburant (13) comprend une butée (28) qui empêche l'introduction d'un pistolet à carburant (27a) au-delà d'une distance prédéterminée dans l'orifice de remplissage (26).

14. Véhicule du type à enfourcher selon l'une des revendications 1 à 13, **caractérisé en ce qu'**un creux (32) dirigé vers le haut est formé sur la plaque de fond (13k) du réservoir de carburant (13) de manière à être à l'extérieur du support de montage (31), dans un sens gauche-droit.

15. Véhicule du type à enfourcher selon l'une des revendications 1 à 14, **caractérisé en ce que** la pompe à carburant (30) est placée globalement au centre du réservoir de carburant (13), dans le sens de la largeur du véhicule.
